# EUROPÄISCHE PATENTANMELDUNG

(11) **EP 1 445 087 A1**
(43) Veröffentlichungstag der Anmeldung: **11.08.2004**
(21) Anmeldenummer: 03026093.9
(22) Anmeldetag: 13.11.2003
(51) Int. Cl.: B29C 45/16, H01H 13/00

(54) **Spritzgiessverfahren zur Herstellung einer Teileinheit**

(30) Priorität: 06.02.2003 DE 10304838
(71) Anmelder: ROBERT BOSCH GMBH, 70442 Stuttgart (DE)
(72) Erfinder: Kimmich, Peter, 71101 Schoeneich (DE)

(57) **Zusammenfassung**

Es wird ein Verfahren zur Herstellung einer aus einem ersten Teil (11) und mindestens einem darin verschieblichen zweiten Teil (12, 13) bestehenden Teileeinheit mittels Spritzgießen angegeben. Um Montagekosten zu sparen und eine qualitativ hochwertige Führung des mindestens einen zweiten Teil (12, 13) in dem ersten Teil (11) sicherzustellen, werden beide Teile (11, 12, 13) in demselben Spritzwerkzeug in 2-Komponententechnik hergestellt (Fig. 1).

## Beschreibung

### Stand der Technik

Die Erfindung geht aus von einem Verfahren zur Herstellung einer Teileeinheit nach dem Oberbegriff des Anspruchs 1.

Bei bekannten Teileeinheiten dieser Art, z.B. als Kappen oder Tafeln ausgebildeten Frontblenden für Fahrzeugaggregate, wie Belüftungs- oder Klimaanlagen, mit Tasten als Bedienelemente werden die Frontblende und die Tasten mittels Spritzgußtechnik in getrennten Spritzwerkzeugen hergestellt und dann die Tasten in die Frontblende montiert. Unter Frontblende werden alle von einem Bediener sicht- und bedienbare Oberflächen verstanden, bei denen mittels einer elektrischen Leiterplatte oder einer Mechanik eine technische Funktion eingestellt oder verändert werden kann.

Die Montage der Tasten in die Frontblenden ist sehr zeitintensiv. Die Abstimmung der Tastenführungen in der Frontblende für die getrennt gefertigten Tasten ist schwierig und aufwendig, da verschiedene Werkzeugformen oder Kavitäten toleranzeng aufeinander abgestimmt werden müssen.

### Vorteile der Erfindung

Das erfindungsgemäße Verfahren mit den Merkmalen des Anspruchs 1 hat den Vorteil, daß durch die gemeinsame Herstellung aller Teile einer Teileeinheit in einem einzigen Spritzwerkzeug einerseits die nachträgliche Montage der Teile ineinander entfällt und die andererseits in dem feststehenden Teil ausgebildeten Führungen für die verschiebbaren Teile nicht mehr auf die verschiebbaren Teile abgestimmt werden müssen, da sich eine solche Abstimmung bei der Spritzgußherstellung automatisch ergibt; denn die Führungen sind dadurch, daß das erste Teil bei der Herstellung formgebend für die beweglichen Teile ist, stets sehr präzise mit minimalem Spalt ausgeführt. Das erfindungsgemäße Verfahren läßt insgesamt die Fertigungskosten für die Teileeinheit deutlich sinken.

Durch die in den weiteren Ansprüchen aufgeführten Maßnahmen sind vorteilhafte Weiterbildungen und Verbesserungen des im Anspruch 1 angegebenen Verfahrens möglich.

Gemäß einer vorteilhaften Ausführungsform des Verfahrens werden für die beiden Teile zwei solche Werkstoffkomponenten verwendet, die keine Verbindung miteinander eingehen und keine Haftung aneinander herstellen. Dadurch kann das zuerst spritzgegossene Teil teilweise als Kavität für das danach zu spritzende Teil genutzt werden, was eine sehr gute Anpassung der beiden Teile aneinander und Abstimmung der beiden Teile aufeinander zur Folge hat.

Gemäß einer vorteilhaften Ausführungsform des erfindungsgemäße Verfahrens wird für das erste Teil eine Werkstoffkomponente verwendet, die eine gegenüber der Werkstoffkomponente des beweglichen zweiten Teils geringfügig geringere Schwindung aufweist. Durch diese geringfügig größere Schwindung der Werkstoffkomponente des zweiten Teils wird ein minimaler Spalt zwischen den Teilen hergestellt, der eine klemmfreies Verschieben des mindestens einen beweglichen zweiten Teils im ersten Teil sicherstellt.

### Zeichnung

Die Erfindung ist anhand eines in der Zeichnung dargestellten Ausführungsbeispiels im folgenden näher beschrieben. Es zeigen:
- Fig. 1: eine Frontblende mit Bedientasten für eine Klimaanlage in einem Kraftfahrzeug in Explosionsdarstellung,
- Fig. 2: eine Draufsicht der Frontblende in Fig. 1,
- Fig. 3: einen Schnitt längs der Linie III - III in Fig. 2.

### Beschreibung des Ausführungsbeispiels

Das Verfahren zur Herstellung einer Teileeinheit aus einem ersten Teil und mindestens einem darin verschieblichen zweiten Teil mittels Spritzgießen wird nachstehend anhand einer in der Zeichnung dargestellten Frontblende 11 mit zwei Bedienttasten 12, 13 für eine Belüftungsanlage eines Kraftfahrzeugs beschrieben. Wie aus der Schnittdarstellung in Fig. 3 ersichtlich ist, sind die beiden Bedientasten 12, 13 in der Frontblende 11 senkrecht zu deren Oberfläche axial um den Hub a verschiebbar, wozu in der Frontblende 11 die Bedientasten 12, 13 verschieblich aufnehmende Tastenführungen 16 ausgebildet sind. Jede Bedientaste 12, 13 löst bei ihrem erstmaligen Druckbetätigen eine Funktion eines im Kraftfahrzeug angeordneten Aggregats aus und schaltet beim nächsten Betätigen diese Funktion wieder ab. Wie die Symbole der Bedientasten 12, 13 angeben, wird mit der Bedientaste 12 ein Gebläse zum Entfrosten oder Beschlagfreihalten der Frontscheibe des Fahrzeugs ein- und ausgeschaltet und mit der Bedientaste 13 ein Betriebszustand einer Belüftungsanlage des Fahrzeugs hergestellt bzw. aufgehoben, in dem Umluft aus dem Fahrgastraum angesaugt und nach Konditionierung in einer Heizungs- oder Klimaanlage wieder in den Fahrgastraum eingeblasen wird. Hierzu arbeiten die durch manuellen Druck axial verschiebbaren Bedientasten 12, 13 auf eine Mechanik oder auf eine auf einer Leiterplatte angeordnete, elektrische Kontaktierung, die hier weiter nicht dargestellt ist.

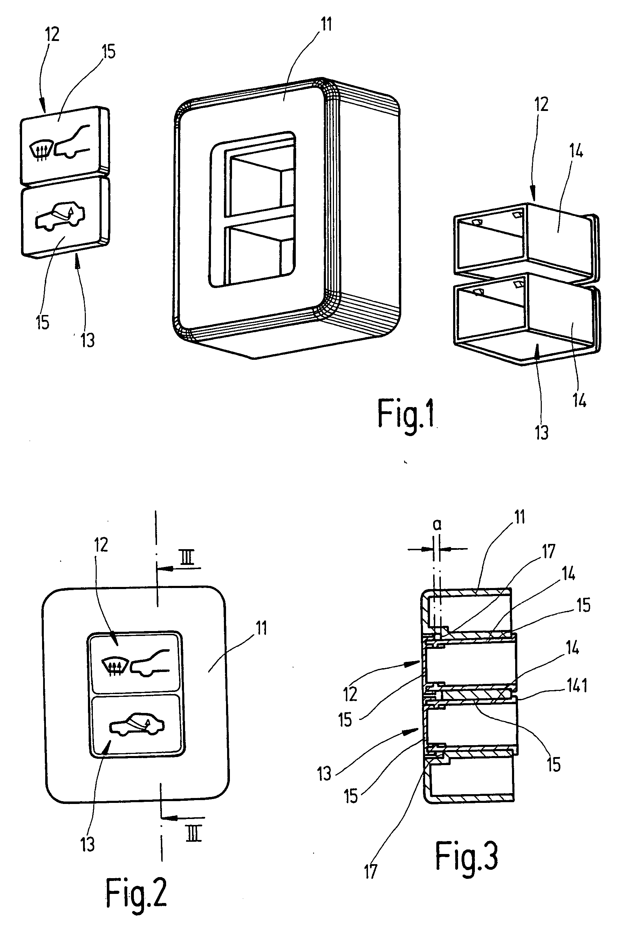

In dem in Fig. 1 - 3 dargestellten Ausführungsbeispiel sind die Bedientasten 12, 13 jeweils aus einem Tastenkörper 14 und einer Tastenkappe 15 zusammengesetzt, die in das vordere Ende des Tastenkörpers 14 eingeklipst wird und Funktionssymbole trägt. Die Tastenkappe 15 kann aus transparentem Material hergestellt sein, so daß die Funktionssymbole als Leuchtsymbole erscheinen, wenn sie von hinten belichtet werden.

Die Frontblende 11 und die Tastenkörper 14 werden mittels Spritzgießen gefertigt, wobei die Frontblende 11 und die Tastenkörper 14 in demselben Spritzwerkzeug in 2-Komponententechnik hergestellt werden. Dabei werden für die Frontblende 11 einerseits und die Tastenkörper 14 andererseits zwei Werkstoffkomponenten verwendet, die keine Verbindung miteinander eingehen und keine Haftung aneinander herstellen. Die für die Frontblende 11 verwendete Werkstoffkomponente weist zudem eine Schwindung auf, die geringfügig geringer ist als die Schwindung der Werkstoffkomponente der Tastenkörper 14.

Beim Spritzgießen wird zunächst in ein Spritzwerkzeug, das eine die Form der Frontblende 11 nachbildende Kavität aufweist, die erste Werkstoffkomponente eingespritzt. Danach wird in demselben Spritzwerkzeug die Kavität für die beiden Tastenkörper 14 hergestellt und die Werkstoffkomponente für die beiden Tastenkörper 14 in das Spritzwerkzeug eingespritzt. Die nachfolgende zweite Kavität wird z.B. durch Drehen oder Wenden des einen Werkzeugteils des üblicherweise zweiteilig ausgebildeten Spritzwerkzeugs hergestellt, wobei die bereits ausgehärtete, in dem anderen Werkzeugteil einliegende Frontblende 11 teilweise zur Bildung der Kavität der Tastenkörper 14 herangezogen wird. Die zweite Kavität kann auch alternativ durch Schieber hergestellt werden, die vor Einspritzen der Werkstoffkomponente für die Tastenkörper 14 in das Spritzwerkzeug eingeschoben werden. Nachdem auch die Tastenkörper 14 in dem Spritzwerkzeug ausgehärtet sind, werden Frontblende 11 und Tastenkörper 14 gemeinsam aus dem Spritzwerkzeug entformt. Dadurch, daß einerseits die in der Frontblende 11 ausgebildeten Tastenführungen 16 zur Herstellung der Kavität der Tastenkörper 14 mitbenutzt worden sind, und dadurch, daß die Werkstoffkomponente für die Tastenkörper 14 eine geringfügig größer Schwindung im Vergleich zu der Werkstoffkomponente für die Frontblende 11 aufweist, sind die Tastenkörper 14 sehr toleranzarm in den Tastenführungen 16 aufgenommen, ohne daß bei Tastenkörperverschiebung eine Klemmung auftreten kann. Dadurch genügt die Bedieneinheit aus Frontblende 11 und Bedientasten 12, 13 den Anforderungen an hohe Qualität und solidem, komfortablem Design.

Nach Entformen der Frontblende 11 mit den beiden darin enthaltenden Tastenkörpern 14 werden die separat und ggf. in transparenter Ausführung hergestellten Tastenkappen 15 auf die Tastenkörper 14 aufgeklipst, wie dies in der Schnittdarstellung in Fig. 3 zu sehen ist. Dadurch, daß die beiden Tastenkörper 14 mit einem an dem tastenkappenfernen Ende ausgebildeten Bund 141 die in der Frontblende 11 ausgebildeten Tastenführungen 16 endseitig übergreifen und die auf der anderen Stirnseite der Tastenkörper 14 aufgeklipsten Tastenkappen 15 mit in der Frontblende 11 ausgebildeten Anschlägen 17 zusammenwirken, können die Bedientasten 12, 13 nicht ohne Demontage der Tastenkappe 15 aus der Frontblende 11 herausgenommen werden, so daß Frontblende 11 und Bedientasten 12, 13 eine montagefreundliche Kompletteinheit bilden.

Bei dem beschriebenen Verfahren des Spritzgießens der Frontblende 11 einerseits und der Tastenkörper 14 andererseits in demselben Spritzwerkzeug kann alternativ auch so verfahren werden, daß zunächst die Werkstoffkomponente für die Tastenkörper 14 in das Spritzwerkzeug eingespritzt wird, in dem eine der Form der Tastenkörper 14 entsprechende Kavität ausgebildet ist. Danach wird wiederum durch Wenden des einen Werkzeugteils des Spritzwerkzeugs und unter teilweise Heranziehung der im anderen Werkzeugsteil ausgehärteten Tastenkörper 14 die Kavität für die Frontblende 11 hergestellt und die Werkstoffkomponente für die Frontblende 11 in das Spritzwerkzeug eingespritzt. Nach Aushärten dieser Werkstoffkomponente werden Frontblende 11 und darin einliegende Tastenkörper 14 gemeinsam entformt.

Anstelle der zweiteilig ausgebildeten Bedientasten 12, 13 können aber auch einteilige Bedientasten, bei denen Tastenkörper 14 und Tastenkappe 15 eine Einheit bilden, in der gleichen Weise wie beschrieben hergestellt werden.

Das erfindungsgemäße Verfahren ist nicht auf das beschriebenen Ausführungsbeispiel der Herstellung einer Frontblende 11 mit Bedientasten 12, 13 beschränkt, vielmehr kann es bei allen Teileeinheiten mit Vorteil angewendet werden, die mindestens ein in einem ersten Teil verschiebliches zweites Teil aufweisen. Vorteilhaft lassen sich auch große Bedienfelder herstellen, bei denen in einem Tastenträger eine größere Anzahl von Drucktasten verschieblich aufgenommen sind. Alle Drucktasten werden gleichzeitig zusammen mit dem Tastenträger mittels eines einzigen Spritzwerkzeugs wie beschrieben hergestellt.

## Patentansprüche

1. Verfahren zur Herstellung einer aus einem ersten Teil (11) und mindestens einem darin verschieblichen zweiten Teil (12, 13) bestehenden Teileeinheit mittels Spritzgießen, **dadurch gekennzeichnet, daß** beide Teile (11, 12, 13) in demselben Spritzwerkzeug in 2-Komponententechnik hergestellt werden.

2. Verfahren nach Anspruch 1, **dadurch gekennzeichnet, daß** für die beiden Teile (11, 12, 13) zwei Werkstoffkomponenten verwendet werden, die keine Verbindung miteinander eingehen und keine Haftung aneinander herstellen.

3. Verfahren nach Anspruch 1 oder 2, **dadurch gekennzeichnet, daß** für den ersten Teil (11) eine Werkstoffkomponente mit einer gegenüber der Werkstoffkomponente des zweiten Teils (12, 13) wenig geringeren Schwindung verwendet wird.

4. Verfahren nach einem der Ansprüche 1 - 3, **dadurch gekennzeichnet, daß** zunächst die Werkstoffkomponente für das eine Teil (11) in eine im Spritzwerkzeug für dieses Teil (11) ausgebildete Kavität eingespritzt wird, dann im Spritzwerkzeug die Kavität für das andere Teil (12, 13) hergestellt und die Werkstoffkomponente für das andere Teil (12, 13) in das Spritzwerkzeug eingespritzt wird und daß anschließend beide Teile (11, 12, 13) aus dem Spritzwerkzeug entformt werden.

5. Verfahren nach Anspruch 4, **dadurch gekennzeichnet, daß** zur Herstellung der Kavität für das nachfolgend zu spritzende andere Teil (12, 13) teilweise die Kavität des zuerst gespritzten einen Teils (11) genutzt wird.

6. Verfahren nach Anspruch 4 oder 5, **dadurch gekennzeichnet, daß** die Kavität für das nachfolgend zu spritzende Teil (12, 13) durch Drehen oder Wenden des Spritzwerkzeugs hergestellt wird.

7. Verfahren nach Anspruch 4 oder 5, **dadurch gekennzeichnet, daß** die Kavität für das nachfolgend zu spritzende Teil (12, 13) durch Einführen von Schiebern in das Spritzwerkzeug hergestellt wird.

8. Verfahren nach einem der Ansprüche 1 - 7, **gekennzeichnet durch** seine Verwendung zur Herstellung eines Bedienfelds mit mindestens einer Drucktaste und einem die mindestens eine Drucktaste verschieblich führende Tastenträger, insbesondere einer Frontblende (11) mit Bedientasten (12, 13) für Fahrzeugaggregate, indem der Tastenträger als eines von zwei Teilen und die mindestens eine Drucktaste als das andere Teil gespritzt wird.

9. Verfahren nach Anspruch 8, **dadurch gekennzeichnet, daß** das Bedienfeld mehrere Drucktasten aufweist und alle Drucktasten gleichzeitig als das andere Teil gespritzt werden.

10. Verfahren nach Anspruch 8 oder 9, **dadurch gekennzeichnet, daß** jede Drucktaste aus einem hohlen Tastenkörper (14) und einer den Tastenkörper (14) abschließenden Tastenkappe (15) zusammengesetzt wird und daß der Tastenkörper (14) als eines der Teile in dem Spritzwerkzeug gespritzt und die Tastenkappe (15) separat hergestellt und in den Tastenkörper (14) eingesetzt, vorzugsweise eingeklipst, wird.
